# EUROPÄISCHE PATENTSCHRIFT

(11) **EP 2 458 185 B1**
(45) Veröffentlichungstag und Bekanntmachung des Hinweises auf die Patenterteilung: **08.05.2013**
(21) Anmeldenummer: 11009260.8
(22) Anmeldetag: 23.11.2011
(51) Int. Cl.: F02D 41/00, F02D 41/18, F01M 13/00, F02M 25/06

(54) **Verfahren zum Betreiben einer Brennkraftmaschine, Steuerelement, Brennkraftmaschine**
Method for operating a combustion engine, control element, combustion engine
Procédé destiné au fonctionnement d'un moteur à combustion interne, élément de commande, moteur à combustion interne

(30) Priorität: 29.11.2010 DE 102010052644
(43) Veröffentlichungstag der Anmeldung: 30.05.2012
(73) Patentinhaber: Audi Aktiengesellschaft, 85045 Ingolstadt (DE)
(72) Erfinder: Maier, Tobias, 85051 Ingolstadt (DE); Lange, Achim, 85049 Ingolstadt (DE)
(74) Vertreter: Lehle, Josef

(56) Entgegenhaltungen:
- DE-A1- 10 026 492
- DE-A1- 10 163 780
- DE-A1-102004 008 891
- DE-A1-102004 030 908
- DE-A1-102007 042 408
- DE-B3-102007 046 489
- US-A1- 2007 156 322

## Beschreibung

Die Erfindung betrifft ein Verfahren zum Betreiben einer Brennkraftmaschine, die wenigstens einen von einer Kurbelkammer eines Kurbelgehäuses zu einem Saugrohr führenden Entlüftungskanal, sowie einen Luftmassensensor zum Erfassen eines der Brennkraftmaschine zugeführten Frischluftmassenstroms umfasst, wobei in Abhängigkeit des erfassten Frischluftmassenstroms eine Zylinderfüllung von mindestens einem Zylinder der Brennkraftmaschine ermittelt wird.

Ferner betrifft die Erfindung ein Steuerelement für ein Steuergerät einer Brennkraftmaschine, insbesondere eines Kraftfahrzeugs.

Weiterhin betrifft die Erfindung eine Brennkraftmaschine, insbesondere für ein Kraftfahrzeug, mit einem eine Kurbelkammer bildenden Kurbelgehäuse sowie mit mindestens einem Zylinder, dem ein Saugrohr zugeordnet ist, wobei von der Kurbelkammer zu dem Saugrohr ein Entlüftungskanal führt, mit einem Luftmassensensor zum Erfassen eines der Brennkraftmaschine zugeführten Frischluftmassenstroms und mit ersten Mitteln zum Ermitteln einer Zylinderfüllung des Zylinders in Abhängigkeit des erfassten Frischluftmassenstroms.

Verfahren, Steuerelemente sowie Brennkraftmaschine der eingangs genannten Art sind aus dem Stand der Technik bekannt. Zum Betreiben von Brennkraftmaschinen ist es üblich, die in die Brennkammern beziehungsweise in die Zylinder der Brennkraftmaschine zugeführte Kraftstoffmenge und Frischluftmasse aufeinander abzustimmen, um eine optimale Verbrennung, beispielsweise in Bezug auf Drehmoment und/oder Abgaswerte, zu erhalten. Hierzu ist es bekannt, den der Brennkraftmaschine zugeführten Frischluftmassenstrom zu erfassen und daraus eine Zylinderfüllung, also die in die Zylinder gelangende Menge an Frischluftmasse zu ermitteln. Es wird also eine zu erwartende Zylinderfüllung bestimmt, auf die dann die Menge des eingespritzten Kraftstoffs angepasst werden kann. Ein entsprechendes Verfahren wird beispielsweise in der Offenlegungsschrift DE 100 40 764 A1 beschrieben.

Weiterhin ist es bekannt, die Kurbelkammer des Kurbelgehäuses regelmäßig oder kontinuierlich zu entlüften, beispielsweise um zu verhindern, dass in der Kurbelkammer entzündbare Gase/Dämpfe entstehen. Hierzu wird die Kurbelkammer durch einen Entlüftungskanal mit einem Saugrohr der Brennkraftmaschine verbunden. Durch die Saugwirkung des durch das Saugrohr strömenden Frischluftmassenstroms auf den Entlüftungskanal wird die Kurbelkammer entlüftet beziehungsweise evakuiert. Zum bedarfsgerechten Entlüften kann hierzu auch ein betätigbares Ventil vorgesehen sein.

Bekannte Verfahren und Brennkraftmaschinen haben den Nachteil, dass der Luftmassensensor nur die insgesamt der Brennkraftmaschine zugeführte Frischluftmasse erfasst, jedoch Massenstromänderungen, die systemintern erfolgen, nicht. Somit ist es bisher nicht oder nur mithilfe weiterer Sensoren möglich, die durch das Entlüften der Kurbelkammer zusätzlich in das Saugrohr gelangte Gasmasse, die die Zylinderfüllung mit beeinflusst, zu berücksichtigen.

Der Erfindung liegt somit die Aufgabe zugrunde, ein Verfahren, ein Steuerelement sowie eine Brennkraftmaschine zu schaffen, die auch systeminterne, die Zylinderfüllung beeinflussende Massenstromänderungen auf einfache und kostengünstige Art und Weise berücksichtigen.

Die der Erfindung zugrunde liegende Aufgabe wird durch ein Verfahren gemäß Anspruch 1 gelöst. Das Verfahren zeichnet sich dadurch aus, dass im Betrieb der Druck in der Kurbelkammer bestimmt und in Abhängigkeit von einer erfassten Änderung des Drucks die ermittelte Zylinderfüllung korrigiert wird. Anstatt dass ein weiterer Sensor vorgesehen wird, werden vorhandene Systeme genutzt, um den die Zylinderfüllung einstellenden, tatsächlich vorliegenden Massenstrom zu modellieren. Eine Druckänderung in der Druckkammer bedeutet, dass Gas oder auch Dampf der Druckkammer entnommen wurde. Langzeitige Druckänderungen, die beispielsweise aufgrund von Ausgasen des in der Kurbelkammer befindlichen Öls entstehen, sind hierbei zu vernachlässigen. Der Druck ist somit ein Indiz für die Gasmasse, die dem Kurbelgehäuse entnommen und der Frischluftmasse im Saugrohr zugefügt wurde. Durch Erfassen des Drucks und insbesondere der Druckänderung in der Druckkammer kann somit auf den entsprechenden Gasmassenstrom geschlossen und die zuvor ermittelte Zylinderfüllung entsprechend korrigiert beziehungsweise angepasst werden. Hierdurch ist es auf einfache Art und Weise möglich, eine verlässliche Aussage über die tatsächlich vorliegende Zylinderfüllung zu erhalten, was eine verlässliche Ansteuerung der Brennkraftmaschine erlaubt. Im Zusammenhang mit der vorliegenden Erfindung ist unter dem Saugrohr im Wesentlichen der gesamte Ansaugtrakt der Brennkraftmaschine zu verstehen. So kann es sich bei dem Saugrohr um einen Abschnitt des Ansaugtraktes handeln, der stromaufwärts oder stromabwärts eines optionalen Turboladers, insbesondere Abgasturbolader, liegt. Weiterhin sind unter dem Begriff der Gasmasse beziehungsweise des Gasmassenstroms auch Volumen zu verstehen, die nicht ausschließlich gasförmig vorliegen, sondern beispielsweise auch dampfförmige Anteile enthalten.

Besonders bevorzugt wird zum Korrigieren der ermittelten Zylinderfüllung ein von der Kurbelkammer zu dem Saugrohr durch den Entlüftungskanal geführter Gasmassenstrom in Abhängigkeit der erfassten Druckänderung bestimmt. Wie oben bereits erwähnt, kann dann über den so bestimmten Gasmassenstrom auf die Zylinderfüllung geschlossen werden. Alternativ ist es denkbar, direkt in Abhängigkeit des Drucks beziehungsweise der Druckänderung die ermittelte Zylinderfüllung beispielsweise durch Multiplizieren mit einem der erfassten Druckänderung entsprechenden Faktor anzupassen oder zu korrigieren.

Vorzugsweise wird der Gasmassenstrom mithilfe der idealen Gasgleichung bestimmt. Die ideale Gasgleichung, die das Verhalten und die Eigenschaften eines idealen Gases beschreibt, ist prinzipiell bekannt und soll hier daher nicht im Detail erläutert werden. Die ideale Gasgleichung ermöglicht eine gute Näherung an die tatsächlich vorliegenden Gasverhältnisse in der Brennkraftmaschine beziehungsweise in dem Entlüftungskanal, durch welchen der Gasmassenstrom zu dem Saugrohr beziehungsweise Ansaugtrakt der Brennkraftmaschine geführt wird. Bei der Bestimmung des Gasmassenstroms mittels der idealen Gasgleichung werden bevorzugt außerdem die Öltemperatur des in dem Kurbelgehäuse beziehungsweise in der Kurbelkammer befindlichen Öls sowie das insbesondere applizierbare Kurbelkammervolumen berücksichtigt.

Gemäß einer vorteilhaften Weiterbildung der Erfindung ist vorgesehen, dass die Gasqualität des Gasmassenstroms ermittelt und der bestimmte Gasmassenstrom in Abhängigkeit der Gasqualität beeinflusst, insbesondere gewichtet wird. Hierzu wird vorzugsweise ein vereinfachtes Beladungsmodell verwendet, das den Anteil von Sauerstoff zu Kraftstoff erfasst beziehungsweise bestimmt. Dadurch ist es nicht nur möglich, die Masse der Zylinderfüllung zu korrigieren, sondern auch ihre Qualität, wodurch sich weitere Vorteile in Hinblick auf die dadurch genauer anpassbare Kraftstoffzufuhr ergeben. Vorzugsweise wird der Gasmassenstrom in Abhängigkeit der Gasqualität mit einem applizierbaren/applizierten Qualitätsfaktor gewichtet.

Besonders bevorzugt wird der Druck in der Kurbelkammer in Abhängigkeit von einem Betriebszustand, insbesondere Betriebspunkt, der Brennkraftmaschine bestimmt. Der Druck in der Kurbelkammer wird somit nicht durch einen den Druck direkt erfassenden Sensor ermittelt, was gemäß einer alternativen Ausführungsform vorgesehen ist, sondern in Abhängigkeit von dem Betriebszustand der Brennkraftmaschine festgelegt. Unter dem Betriebszustand der Brennkraftmaschine sind dabei insbesondere unterschiedliche Betriebspunkte, insbesondere bezüglich Last und Drehzahl, zu verstehen. Durch eine Änderung des Betriebspunkts ändert sich auch der Sog, der durch den Entlüftungskanal auf die Kurbelkammer wirkt und den Gasmassenstrom einstellt. Der Betriebszustand kann dabei beispielsweise durch die Betätigung eines Fahrpedals des Kraftfahrzeugs und/oder durch Daten aus einem Steuergerät der Brennkraftmaschine bestimmt werden. Besonders bevorzugt wird der Druck mithilfe eines PT1-Filters beziehungsweise PT1-Glieds, insbesondere PT1-Tiefpassfilter, bestimmt beziehungsweise modelliert.

Gemäß einer vorteilhaften Weiterbildung der Erfindung ist vorgesehen, dass der Druck mithilfe mindestens einer Kennlinie und/oder mindestens eines Kennfeldes in Abhängigkeit vom Betriebszustand der Brennkraftmaschine bestimmt wird. So wird der Druck bevorzugt bei unterschiedlichen Betriebszuständen der Brennkraftmaschine erfasst und in einem nicht flüchtigen Speicher in einer Kennlinie und/oder einem Kennfeld hinterlegt beziehungsweise appliziert. Im Betrieb kann dann auf das so erstellte Kennfeld beziehungsweise die Kennlinie zurückgegriffen und auf einfache und schnelle Art und Weise der Druck in der Kurbelkammer bestimmt werden.

Vorzugsweise werden bei der Bestimmung des Drucks in der Kurbelkammer die Umgebungstemperatur und/oder der Umgebungsdruck berücksichtigt. So wird insbesondere in Abhängigkeit von der Umgebungstemperatur und/oder dem Umgebungsdruck aus unterschiedlichen, wie oben beschriebenen Kennlinien beziehungsweise Kennfeldern eine/eines ausgewählt. Ebenso ist es denkbar, ein Kennfeld vorzusehen, das neben dem Betriebspunkt der Brennkraftmaschine die Umgebungstemperatur und/oder den Umgebungsdruck bereits mit umfasst beziehungsweise berücksichtigt. Der Umgebungsdruck kann beispielsweise aus Höhendaten und/oder mithilfe eines entsprechenden Drucksensors ermittelt oder bestimmt werden.

Vorteilhafterweise wird in Abhängigkeit der korrigierten Zylinderfüllung eine dem jeweiligen Zylinder zugeführte Kraftstoffmenge angepasst, um eine optimale Verbrennung zu erhalten.

Insgesamt ermöglicht somit das erfindungsgemäße Verfahren das Einstellen einer optimalen Kraftstoffmenge in Abhängigkeit von dem durch den Luftmassensensor erfassten Frischluftmassenstrom und dem bestimmten, internen Gasmassenstrom aus der Kurbelkammer in das Saugrohr.

Das erfindungsgemäße Steuerelement für ein Steuergerät einer Brennkraftmaschine zeichnet sich dadurch aus, dass darauf ein Programm abgespeichert ist, das auf einem Rechengerät, insbesondere einem Mikroprozessor, ablauffähig und zur Ausführung eines Verfahrens gemäß einer oder mehrerer der oben beschriebenen Ausführungsformen geeignet ist.

Die erfindungsgemäße Brennkraftmaschine umfasst die Merkmale des Anspruchs 10. Sie zeichnet sich durch zweite Mittel zum Bestimmen des Drucks in der Kurbelkammer des Kurbelgehäuses und zum Korrigieren der ermittelten Zylinderfüllung in Abhängigkeit von einer erfassten Änderung des Drucks in der Kurbelkammer, insbesondere gemäß einem Verfahren nach einer oder mehrerer der oben beschriebenen Ausführungsformen, aus.

Im Folgenden soll die Erfindung anhand der Zeichnung näher erläutert werden. Dazu zeigen
- Figur 1: eine Brennkraftmaschine in einer vereinfachten Darstellung,
- Figur 2: das erfindungsgemäße Verfahren zum Betreiben der Brennkraftmaschine in einem Flussdiagramm und
- Figur 3: eine Weiterbildung des Verfahrens in einem Flussdiagramm.

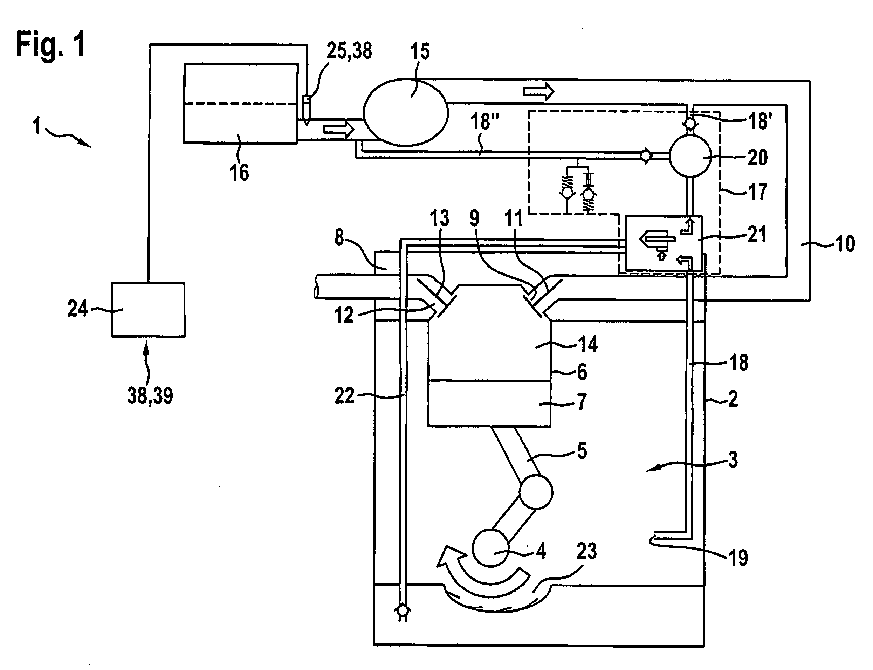

Figur 1 zeigt in einer vereinfachten Darstellung eine Brennkraftmaschine 1 eines hier nicht näher dargestellten Kraftfahrzeugs. Die Brennkraftmaschine 1 umfasst ein Kurbelgehäuse 2, das eine Kurbelkammer 3 bildet. In der Kurbelkammer 3 ist eine Kurbelwelle 4 der Brennkraftmaschine 1 drehbar gelagert. Ebenfalls befinden sich in der Kurbelkammer 3 das durch die Kurbelwelle angetriebene Pleuel 5, das mit einem in einem Zylinder 6 axial verlagerbaren Kolben 7 auf übliche Art und Weise verbunden ist, sowie ein Ölhobel 23. Der Zylinder 6 wird nach oben durch einen Zylinderkopf 8 der Brennkraftmaschine 1 verschlossen, wobei in dem Zylinderkopf eine Einlassöffnung 9 ausgebildet ist, in welche ein Saugrohr 10 zum Zuführen von Frischluft in den Zylinder 6 mündet. Die Einlassöffnung 9 ist durch ein betätigbares Ventil 11 verschließbar und freigebbar. Weiterhin weist der Zylinderkopf 8 eine Auslassöffnung 12 auf, die in einen Auslasskanal übergeht und durch ein betätigbares Ventil 13 freigebbar und verschließbar ist. Der Zylinder 6, der Zylinderkopf 8 und der Kolben 7 bilden somit eine Brennkammer 14 der Brennkraftmaschine 1. Zweckmäßigerweise umfasst die Brennkraftmaschine 1 mehrere derartiger Brennkammern und entspricht insofern herkömmlichen Brennkraftmaschinen, sodass hierauf nicht im Detail eingegangen werden soll. Der in die eine oder die mehreren Brennkammern mündende Saugkanal 10 geht von der Auslassseite eines Verdichters eines Abgasturboladers 15 aus. Die Einlassseite des Verdichters des Abgasturboladers 15 ist wiederum mit einem Luftfilter 16 verbunden.

Weiterhin weist die Brennkraftmaschine 1eine Entlüftungseinrichtung 17 auf. Die Entlüftungseinrichtung 17 umfasst einen Entlüftungskanal 18, dessen Entnahmeöffnung 19 in der Kurbelkammer 3 liegt, und ein Druckregelventil 20, mittels dessen die Kurbelkammer 3 über den Entlüftungskanal 18 mit dem Ansaugtrakt der Brennkraftmaschine 1 verbindbar ist. Dazu ist der Entlüftungskanal 18 stromabwärts des Druckregelventils 20 zweigeteilt ausgebildet, wobei ein erster Teil 18' in das Saugrohr 10 stromabwärts des Abgasturboladers 15 mündet, und ein zweiter Teil 18" in den Ansaugtrakt zwischen Luftfilter 16 und Abgasturbolader 15. Sowohl in dem Teil 18' als auch in dem Teil 18" ist jeweils ein Rückschlagventil vorgesehen. Stromaufwärts des Druckregelventils 20 ist darüber hinaus eine Ölabscheidervorrichtung 21 geschaltet, die dem der Brennkammer 3 entnommenen Medium Öl entnimmt und über eine Ölrücklaufleitung 22 zurück in die Ölwanne des Kurbelgehäuses 2 führt. Ölabscheidervorrichtungen sind prinzipiell bekannt, sodass auf diese hier nicht näher eingegangen werden soll.

Weiterhin umfasst die Brennkraftmaschine 1 eine Steuereinheit 24, die als Motorsteuergerät die Brennkraftmaschine 1 betreibt. Um das Kraftstoff-Gas-Gemisch für eine dem Bedarf entsprechend optimale Verbrennung in der Brennkammer 14 einzustellen, ist die Steuereinheit 24 mit einem Luftmassensensor 25 verbunden, der in dem Ansaugtrakt zwischen dem Luftfilter 16 und dem Abgasturbolader 15 angeordnet ist und den durch den Luftfilter 16 in den Ansaugtrakt strömenden Frischluftmassenstrom erfasst. In Abhängigkeit des erfassten Frischluftmassenstroms berechnet die Steuereinheit 24 die Zylinderfüllung, also die der Brennkammer 14 zugeführte Frischluftmasse. In Abhängigkeit von der Zylinderfüllung bestimmt die Steuereinheit 24 die Menge an einzuspritzendem Kraftstoff. Mittel zum Einspritzen des Kraftstoffs sind zwar vorgesehen, jedoch in der Darstellung nicht gezeigt und für den Fachmann außerdem hinreichend bekannt, sodass hier nicht näher darauf eingegangen werden soll.

Im Betrieb strömt Frischluft - wie durch Pfeile gekennzeichnet - von dem Luftfilter in den Absaugtrakt durch den Abgasturbolader 15 und das Saugrohr 10 in die Brennkammer 14. An den Mündungsstellen des Entlüftungskanals 18 im Ansaugtrakt entsteht durch die an der Mündungsöffnung vorbeiströmende Frischluft ein Sog, der bei entsprechend geöffnetem beziehungsweise eingestelltem Druckregelventil 20 dazu führt, dass Gas aus der Kurbelkammer 3 gesaugt und der Frischluft beigemengt wird. Je nach dem, wie das Druckregelventil 20 eingestellt ist, wird das aus der Druckkammer 3 entnommene Gas stromaufwärts des Abgasturboladers 15 oder stromabwärts des Abgasturboladers 15 der Frischluft beigemischt. Der durch den Sog erzeugte Gasmassenstrom, der durch den Entlüftungskanal 18 der Frischluft beigemengt wird, beeinflusst die Zylinderfüllung, also das Gasvolumen und die Gaszusammensetzung in der Brennkammer 14, ohne dass dies durch den Luftmassensensor 25 erkannt werden könnte.

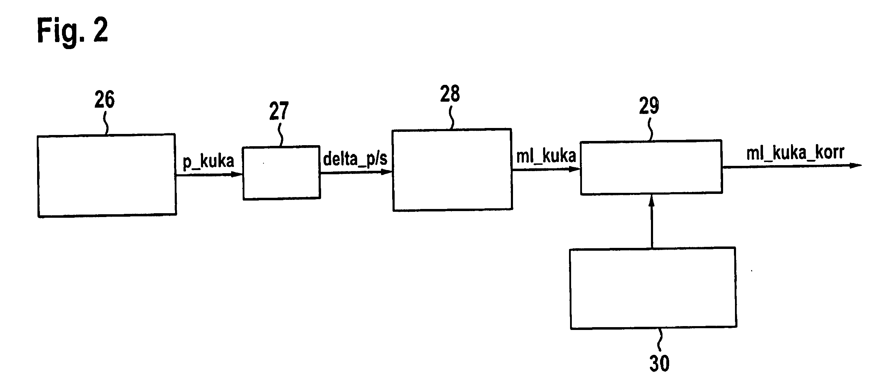

Die Steuereinheit 24 umfasst daher vorteilhafterweise ein Steuerelement, das zur Durchführung des Verfahrens, wie es in Figur 2 in einem Flussdiagramm schematisch dargestellt ist, geeignet ist. Das Verfahren sieht in einem ersten Schritt 26 vor, dass der in der Kurbelkammer 3 herrschende Druck p_kuka bestimmt wird. Ist das Druckregelventil 20 derart eingestellt, dass entweder der Kanal 18' oder der Kanal 18" freigegeben ist, so ändert sich der Druck in der Kurbelkammer 3 im Wesentlichen nur in Abhängigkeit vom Betriebszustand der Brennkraftmaschine 1. Durch Verändern des Betriebszustands, insbesondere des Betriebspunkts in Bezug auf Drehzahl und/oder Drehmoment, ändert sich auch der der Brennkraftmaschine 1 zugeführte Frischluftmassenstrom, der durch das Saugrohr 10 strömt, und damit der Gasmassenstrom, der durch den Entlüftungskanal 18 der Druckkammer 3 entnommen wird. In Abhängigkeit vom Betriebszustand beziehungsweise -punkt stellt sich somit ein Kurbelkammerdruck p_kuka ein. Vorzugweise wird der Kurbelkammerdruck durch die Steuereinheit 24 in Abhängigkeit von dem eingestellten Betriebszustand der Brennkraftmaschine 1 bestimmt. Hierzu ist insbesondere mindestens ein Kennfeld und/oder eine Kennlinie vorgesehen, der in Abhängigkeit vom Betriebszustand der vorliegende Kurbelkammerdruck entnehmbar ist. Die Kennlinie oder das Kennfeld sind zweckmäßigerweise vor Inbetriebnahme der Brennkraftmaschine 1 durch Versuche bedatet worden.

In einem folgenden Schritt 27 wird der aktuell bestimmte Kurbelkammerdruck mit einem zeitlich vorhergehenden Kurbelkammerdruck verglichen, um eine Druckänderung in der Kurbelkammer 3 zu erfassen, oder der Kurbelkammerdruck wird nach der Zeit abgeleitet (d/dt). Wird eine Änderung des Drucks beziehungsweise eine Druckänderung delta_p/s erfasst, so wird in einem folgenden Schritt 28 mittels der idealen Gasgleichung der durch die Druckänderung bewirkte, durch die Entlüftungsleitung 18 strömende Gasmassenstrom ml_kuka berechnet beziehungsweise bestimmt. Durch den bestimmte Gasmassenstrom und den erfassten Frischluftmassenstrom ist es nunmehr möglich, die Zylinderfüllung der Brennkammer(n) 14 der Brennkraftmaschine 1 zu ermitteln, indem die ermittelte Zylinderfüllung in Abhängigkeit von dem Gasmassenstrom korrigiert wird. Dadurch ist es weiterhin möglich, in Abhängigkeit der korrigierten Zylinderfüllung eine angepasste Kraftstoffmenge zu bestimmen, die der Zylinderfüllung beigemengt werden soll, um eine optimale Verbrennung zu erhalten.

Bevorzugt wird der bestimmte Gasmassenstrom ml_kuka in einem weiteren Schritt 29 korrigiert. Dazu wird in einem Schritt 30 mittels eines Beladungsmodells die Gasqualität des der Kurbelkammer 3 entnommenen Gasmassenstroms, also dessen Verhältnis von Sauerstoff zu Kraftstoff ermittelt. Der Gasmassenstrom wird in dem Schritt 29 durch die erfasste beziehungsweise bestimmte Gasqualität beeinflusst und insbesondere gewichtet, sodass der gewichtete Gasmassenstrom zum Korrigieren der Zylinderfüllung genutzt wird.

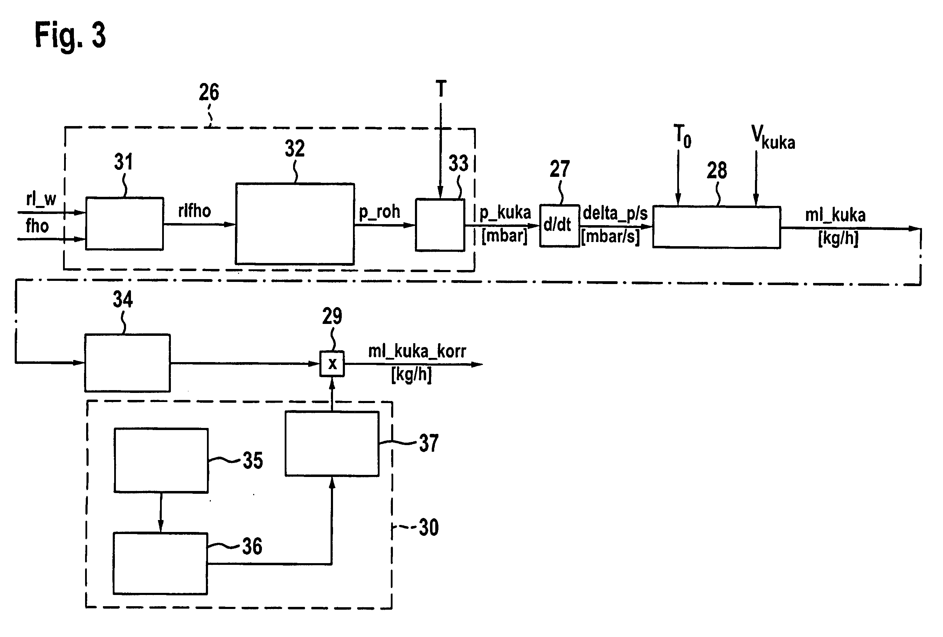

Figur 3 zeigt eine Weiterbildung des obenstehenden Verfahrens, wobei bereits bekannte Elemente mit den gleichen Bezugszeichen versehen sind, sodass insofern auf die obenstehende Beschreibung verwiesen wird. Im Folgenden soll im Wesentlichen nur auf die Unterschiede beziehungsweise die Ergänzungen eingegangen werden.

Schritt 26 zeichnet sich gemäß des weitergebildeten Ausführungsbeispiels durch drei Teilschritte 31, 32, 33 aus. Im ersten Teilschritt 31 werden als Eingangswerte die sogenannte relative Last rl, die ein Indikator für die Zylinderfüllung beziehungsweise den zugeführten Frischluftmassenstrom ist, sowie ein Höhenfaktor fho einem ersten Kennfeld zugeführt, aus welchem ein höhenkorrigierter Lastwert rlfho entnommen wird. In Abhängigkeit des höhenkorrigierten Lastwertes rlfho sowie der Drehzahl nmot der Brennkraftmaschine wird in dem Teilschritt 32 ein stationärer relativer Kurbelkammerdruck p_roh mithilfe eines weiteren Kennfeldes bestimmt. In dem Teilschritt 33 wird der stationäre, relative Kurbelkammerdruck p_roh durch einen PT1-Tiefpassfilter geführt, dessen Zeitkonstante T applizierbar ist, um den Druck in der Kurbelkammer beziehungsweise den Kurbelkammerdruck p_kuka zu erhalten.

Der Kurbelkammerdruck p_kuka wird in dem darauffolgenden Schritt 27 nach der Zeit abgeleitet, um die Druckänderung delta_p/s zu erhalten, die der idealen Gasgleichung in Schritt 28 zugeführt wird. Als weitere Größen werden der idealen Gasgleichung noch das Kurbelkammervolumen Vₖᵤₖₐ sowie die Öltemperatur Tₒ, also die Temperatur des in der Kurbelkammer beziehungsweise in der Ölwanne befindlichen Öls zugeführt. Hieraus ergibt sich insgesamt, wie oben bereits beschrieben, der Gasmassenstrom ml_kuka beispielsweise in Kilogramm pro Stunde.

In einem folgenden Schritt 34 wird der Gasmassenstrom einer ersten Gewichtung unterzogen. Hierzu wird eine Kennlinie herangezogen, die den Gasmassenstrom für die weitere Bestimmung insbesondere nur dann berücksichtigt, wenn Druckänderungen beziehungsweise Gasmassenströme erfasst beziehungsweise ermittelt wurden, die einen vorgebbaren Mindestwert überschreiten.

In dem darauffolgenden Schritt wird der berücksichtigte Gasmassenstrom ml_kuka mit einem Beladungsfaktor gewichtet, um den korrigierten Gasmassenstrom ml_kuka_korr zu erhalten. In dem Schritt 30 wird dazu in einem Kennfeld in Abhängigkeit von der Motordrehzahl und der relativen Last eine Zeitkonstante in dem ersten Teilschritt 35 bestimmt und in einem zweiten Teilschritt 36 zur Berechnung eines Integrals mittels eines Integrators der Beladungsfaktor genutzt, der das Verhältnis von Sauerstoff zu Kraftstoff in dem Gasmassenstrom darstellt. In einem weiteren Teilschritt 37 wird der Beladungsfaktor mithilfe einer weiteren Kennlinie gewichtet und im Schritt 29 mit dem gewichteten Gasmassenstrom ml_kuka multipliziert, um den korrigierten Gasmassenstrom ml_kuka_korr zu erhalten.

Bei dem Luftmassensensor 25 und der Steuereinheit 24 handelt es sich somit um erste Mittel 38 zum Ermitteln der Zylinderfüllung in Abhängigkeit des erfasste Frischluftmassenstroms. Zumindest die Steuereinheit 24, das darin integrierte oben beschriebene Steuerelement sowie die jeweils hinterlegten Kennfelder und/oder Kennlinien bilden dabei zweite Mittel 39 zum Bestimmen des Drucks p_kuka und zum Korrigieren der ermittelten Zylinderfüllung in Abhängigkeit eines auftretenden Gasmassenstroms von der Kurbelkammer 3 in das Saugrohr 10.

Insgesamt ermöglicht es die Erfindung somit auf einfache Art und Weise, die internen Gasströme der Brennkraftmaschine, die beim Entlüften der Kurbelkammer 3 erfolgen, bei der Bestimmung der Zylinderfüllung zu berücksichtigen. Dabei wird sowohl die Menge als auch die Qualität des Gasmassenstroms, der bei der Entlüftung aus der Kurbelkammer in den Ansaugtrakt beziehungsweise in das Saugrohr 10 gelangt, berücksichtigt.

### BEZUGSZEICHENLISTE

| | |
|---|---|
| 1 | Brennkraftmaschine |
| 2 | Kurbelgehäuse |
| 3 | Kurbelkammer |
| 4 | Kurbelwelle |
| 5 | Pleuel |
| 6 | Zylinder |
| 7 | Kolben |
| 8 | Zylinderkopf |
| 9 | Einlassöffnung |
| 10 | Saugrohr |
| 11 | Ventil |
| 12 | Auslasskanal |
| 13 | Ventil |
| 14 | Brennkammer |
| 15 | Abgasturbolader |
| 16 | Luftfilter |
| 17 | Entlüftungseinrichtung |
| 18 | Entlüftungskanal |
| 18' | erster Teil |
| 18" | zweiter Teil |
| 19 | Entnahmeöffnung |
| 20 | Druckregelventil |
| 21 | Ölabscheidervorrichtung |
| 22 | Ölrücklaufleitung |
| 23 | Ölhobel |
| 24 | Steuereinheit |
| 25 | Luftmassensensor |
| 26 | Schritt |
| 27 | Schritt |
| 28 | Schritt |
| 29 | Schritt |
| 30 | Schritt |
| 31 | Teilschritt |
| 32 | Teilschritt |
| 33 | Teilschritt |
| 34 | Schritt |
| 35 | erster Teilschritt |
| 36 | zweiter Teilschritt |
| 37 | Teilschritt |
| 38 | erste Mittel |
| 39 | zweite Mittel |

## Patentansprüche

1. Verfahren zum Betreiben einer Brennkraftmaschine (1), die wenigstens einen von einer Kurbelkammer (3) eines Kurbelgehäuses (2) zu einem Saugrohr (10) führenden Entlüftungskanal (18) sowie einen Luftmassensensor (25) zum Erfassen eines der Brennkraftmaschine (1) zugeführten Frischluftmassenstroms umfasst, wobei in Abhängigkeit des erfassten Frischluftmassenstroms eine Zylinderfüllung von mindestens einem Zylinder (6) der Brennkraftmaschine (1) ermittelt wird, **dadurch gekennzeichnet, dass** im Betrieb der Druck (p_kuka) in der Kurbelkammer (3) bestimmt und in Abhängigkeit von einer erfassten Änderung (delta_p/s) des Drucks in der Kurbelkammer (3) die ermittelte Zylinderfüllung korrigiert wird.

2. Verfahren nach Anspruch 1, **dadurch gekennzeichnet, dass** zum Korrigieren der ermittelten Zylinderfüllung ein von der Kurbelkammer (3) zu dem Saugrohr (10) durch den Entlüftungskanal (18) geführter Gasmassenstrom in Abhängigkeit der erfassten Druckänderung bestimmt wird.

3. Verfahren nach einem der vorhergehenden Ansprüche, **dadurch gekennzeichnet, dass** der Gasmassenstrom (ml_kuka) mithilfe der idealen Gasgleichung bestimmt wird.

4. Verfahren nach einem der vorhergehenden Ansprüche, **dadurch gekennzeichnet, dass** die Gasqualität des Gasmassenstroms (ml_kuka) ermittelt und der bestimmte Gasmassenstrom (ml_kuka) in Abhängigkeit der Gasqualität beeinflusst, insbesondere gewichtet wird.

5. Verfahren nach einem der vorhergehenden Ansprüche, **dadurch gekennzeichnet, dass** der Druck (p_kuka) in der Kurbelkammer (3) in Abhängigkeit von einem Betriebszustand, insbesondere Betriebspunkt der Brennkraftmaschine (1) mithilfe eines PT1-Filters bestimmt wird.

6. Verfahren nach einem der vorhergehenden Ansprüche, **dadurch gekennzeichnet, dass** der Druck (p_kuka) mithilfe mindestens einer Kennlinie und/oder mindestens eines Kennfeldes in Abhängigkeit vom Betriebszustand der Brennkraftmaschine (1) bestimmt wird.

7. Verfahren nach einem der vorhergehenden Ansprüche, **dadurch gekennzeichnet, dass** bei der Bestimmung des Drucks (p_kuka) in der Kurbelkammer (3) die Umgebungstemperatur und/oder der Umgebungsdruck berücksichtigt werden.

8. Verfahren nach einem der vorhergehenden Ansprüche, **dadurch gekennzeichnet, dass** in Abhängigkeit der korrigierten Zylinderfüllung eine dem jeweiligen Zylinder (6) zugeführte Kraftstoffmenge angepasst wird.

9. Steuerelement für ein Steuergerät einer Brennkraftmaschine (1) insbesondere eines Kraftfahrzeugs, auf dem ein Programm abgespeichert ist, das ein Verfahren nach einem oder mehreren der vorhergehenden Ansprüche ausführt, wenn es auf einem Rechengerät, insbesondere einem Mikroprozessor, abläuft.

10. Brennkraftmaschine (1), insbesondere für ein Kraftfahrzeug, mit einem eine Kurbelkammer (3) bildenden Kurbelgehäuse (2) sowie mit mindestens einem Zylinder (6), dem ein Saugrohr (10) zugeordnet ist, wobei von der Kurbelkammer (3) zu dem Saugrohr (10) ein Entlüftungskanal (18) führt, mit einem Luftmassensensor (25) zum Erfassen eines der Brennkraftmaschine (1) zugeführten Frischluftmassenstroms und mit ersten Mitteln (38) zum Ermitteln einer Zylinderfüllung des Zylinders (6) in Abhängigkeit des erfassten Frischluftmassenstroms, **gekennzeichnet durch** zweite Mittel (39) zum Bestimmen des Drucks in der Kurbelkammer (3) des Kurbelgehäuses (2) und zum Korrigieren der ermittelten Zylinderfüllung in Abhängigkeit von einer erfassten Änderung des Drucks in der Kurbelkammer (3), gemäß einem Verfahren nach einem oder mehreren der vorhergehenden Ansprüche.

## Claims

1. Method for operating an internal combustion engine (1), which comprises at least one venting duct (18) leading from a crank chamber (3) of a crankcase (2) to an intake manifold (10) and an air mass sensor (25) for measuring a fresh air mass flow supplied to the internal combustion engine (1), wherein a cylinder charge of at least one cylinder (6) of the internal combustion engine (1) is determined depending on the measured fresh air mass flow, **characterised in that** during operation the pressure (p_kuka) in the crank chamber (3) is determined and the ascertained cylinder charge is corrected depending on a measured change (delta_p/s) of the pressure in the crank chamber (3).

2. Method according to claim 1, **characterised in that**, to correct the ascertained cylinder charge, a gas mass flow led from the crank chamber (3) to the intake manifold (10) through the venting duct (18) is determined depending on the measured pressure change.

3. Method according to either of the preceding claims, **characterised in that** the gas mass flow (ml_kuka) is determined using the ideal gas equation.

4. Method according to any of the preceding claims, **characterised in that** the gas quality of the gas mass flow (ml_kuka) is ascertained, and the determined gas mass flow (ml_kuka) is influenced depending on the gas quality, in particular is weighted.

5. Method according to any of the preceding claims, **characterised in that** the pressure (p_kuka) in the crank chamber (3) is determined depending on an operating state, in particular an operating point of the internal combustion engine (1), using a PT1-filter.

6. Method according to any of the preceding claims, **characterised in that** the pressure (p_kuka) is determined using at least one characteristic curve and/or at least one characteristic curve field depending on an operating state of the internal combustion engine (1).

7. Method according to any of the preceding claims, **characterised in that** the pressure in the crank chamber (3) is determined while taking into account the ambient temperature and/or ambient pressure.

8. Method according to any of the preceding claims, **characterised in that** a fuel quantity supplied to the relevant cylinder (6) is adapted depending on the corrected cylinder charge.

9. Control element for a controller of an internal combustion engine (1), in particular a motor vehicle, on which a program is stored, which control element carries out a method according to one or more of the preceding claims when executed on a computer, in particular a microprocessor.

10. Internal combustion engine (1), in particular for a motor vehicle, comprising a crankcase (2) forming a crank chamber (3), and
at least one cylinder (6), an intake manifold (10) being associated with the at least one cylinder (6), a venting duct (18) leading from the crank chamber (3) to the intake manifold (10), an air mass sensor (25) for measuring a fresh air mass flow supplied to the internal combustion engine (1), and first means (38) for determining a cylinder charge of the cylinder (6) depending on the measured fresh air mass flow, **characterised by** second means (39) for determining the pressure in the crank chamber (3) of the crankcase (2) and for correcting the determined cylinder charge depending on a measured change of the pressure in the crank chamber (3) by a method according to one or more of the preceding claims.

## Revendications

1. Procédé de fonctionnement d'un moteur à combustion interne (1), qui comprend au moins un canal d'évacuation d'air (18) menant d'une chambre à manivelle (3) d'un carter de vilebrequin (2) à un tuyau d'aspiration (10) ainsi qu'un capteur de masse d'air (25) pour détecter un courant massique d'air frais acheminé au moteur à combustion interne (1), dans lequel, en fonction du courant massique d'air frais détecté, on calcule la charge d'au moins un cylindre (6) du moteur à combustion interne (1), **caractérisé en ce que**, en service, on détermine la pression (p_kuka) dans la chambre à manivelle (3) et, en fonction d'une variation détectée (delta_p/s) de la pression dans la chambre à manivelle (3), on corrige la charge de cylindre calculée.

2. Procédé selon la revendication 1, **caractérisé en ce que**, pour corriger la charge de cylindre calculée, on détermine un courant massique de gaz acheminé de la chambre à manivelle (3) au tuyau d'aspiration (10) via le canal d'évacuation d'air (18) en fonction de la variation de pression détectée.

3. Procédé selon l'une quelconque des revendications précédentes, **caractérisé en ce que** le courant massique de gaz (ml_kuka) est déterminé à l'aide de l'équation des gaz idéale.

4. Procédé selon l'une quelconque des revendications précédentes, **caractérisé en ce que** l'on calcule la qualité gazeuse du courant massique de gaz (ml_kuka) et le courant massique de gaz (ml_kuka) déterminé est influencé en fonction de la qualité du gaz, en particulier pondéré.

5. Procédé selon l'une quelconque des revendications précédentes, **caractérisé en ce que** la pression (p_kuka) dans la chambre à manivelle (3) est déterminée en fonction d'un état opérationnel, en particulier d'un point de fonctionnement du moteur à combustion interne (1) à l'aide d'un filtre PT1.

6. Procédé selon l'une quelconque des revendications précédentes, **caractérisé en ce que** la pression (p_kuka) est déterminée à l'aide d'au moins une caractéristique et/ou d'au moins un champ caractéristique en fonction de l'état opérationnel du moteur à combustion interne (1).

7. Procédé selon l'une quelconque des revendications précédentes, **caractérisé en ce que**, lors de la détermination de la pression (p_kuka) dans la chambre à manivelle (3), la température ambiante et/ou la pression ambiante sont prises en compte.

8. Procédé selon l'une quelconque des revendications précédentes, **caractérisé en ce que**, en fonction de la charge de cylindre corrigée, on adapte une quantité de carburant acheminée au cylindre respectif (6).

9. Elément de commande pour un appareil de commande d'un moteur à combustion interne (1), en particulier d'un véhicule à moteur, sur lequel est enregistré un programme qui exécute un procédé selon une ou plusieurs des revendications précédentes, lorsqu'il tourne sur un appareil de calcul, en particulier un microprocesseur.

10. Moteur à combustion interne (1), en particulier pour un véhicule à moteur, comprenant un carter de vilebrequin (2) formant une chambre à manivelle (3), ainsi qu'au moins un cylindre (6), auquel est affecté un tuyau d'aspiration (10), dans lequel un canal d'évacuation d'air (18) est acheminé de la chambre à manivelle (3) au tuyau d'aspiration (10), un capteur de masse d'air (25) pour détecter un courant massique d'air frais acheminé au moteur à combustion interne (1) et des premiers moyens (38) pour calculer une charge du cylindre (6) en fonction du courant massique d'air frais détecté, **caractérisé par** des seconds moyens (39) permettant de déterminer la pression dans la chambre à manivelle (3) du carter de vilebrequin (2) et pour corriger la charge de cylindre calculée en fonction d'une variation détectée de la pression dans la chambre à manivelle (3), conformément à un procédé selon une ou plusieurs des revendications précédentes.
